# EUROPEAN PATENT SPECIFICATION

(11) **EP 1 323 352 B1**
(45) Date of publication and mention of the grant of the patent: **13.06.2007**
(21) Application number: 01956804.7
(22) Date of filing: 06.08.2001
(51) Int. Cl.: A23J 3/16, A23L 1/20, A23L 1/211

(54) **PROCESS FOR PRODUCING SOYBEAN PROTEIN**
VERFAHREN ZUR HERSTELLUNG VON SOJABOHNENEIWEISS
PROCEDE DE PRODUCTION DE PROTEINE DE SOJA

(30) Priority: 29.09.2000 JP 2000297746; 01.06.2001 JP 2001165996
(43) Date of publication of application: 02.07.2003
(73) Proprietor: Fuji Oil Company, Ltd., Osaka-shi, Osaka 542-0086 (JP)
(72) Inventor: SAKATA, Tetsuo, Fuji Oil Company Limited, Izumisano-shi, Osaka 598-8540 (JP); SAMOTO, Masahiko, Fuji Oil Company Limited, Izumisano-shi, Osaka 598-8540 (JP); OTANI, Yasuo, Fuji Oil Company Limited, Izumisano-shi, Osaka 598-8540 (JP)
(74) Representative: Hayes, Adrian Chetwynd
(86) International application number: PCT/JP2001/006756
(87) International publication number: WO 2002/028197

(56) References cited:
- GB-A- 852 053
- JP-A- 10 165 106
- JP-A- 57 022 649
- JP-A- 2000 083 595
- US-A- 4 054 679
- US-A- 4 278 597
- DATABASE FSTA [Online] INTERNATIONAL FOOD INFORMATION SERVICE (IFIS), FRANkFURT-MAIN, DE; 1979, MOORE K: "Improved soy protein concentrates bridge functionality gap." XP002357909 Database accession no. 79-2-09-g0711

## Description

### Field of the Invention

The present invention relates to a method for producing a soybean protein having excellent flavor.

### Description of the Related Art

Soybean protein is employed widely these days in processed food products such as hams, sausages, minced sea foods, hamburger steaks and shao-mais because of its water-retaining and gel-forming properties.

However, soybean protein has a soybean-derived odor called "soybean odor", which poses a problem because of its adverse effect, when employed in a processed food product, on the flavor associated naturally with such a food product. In order to solve this problem, various attempts have been made. For example, an aqueous solution of ethanol is employed for washing in a manufacturing process of a soybean protein.

Nevertheless, this attempt is problematic since it undergoes ethanol-induced denaturation of a soybean protein which makes it difficult to exert the soybean protein's functions such as a gel-forming ability unless a sophisticated procedure is observed carefully, and also problematic since it is an expensive process.

JP-A 63-219343 discloses a method for producing a soybean protein from lipoxygenase isozyme-defect soybeans, which is however expensive and cannot readily be available resulting in poor feasibility.

On the other hand, JP-B 53-19699 (JP-A 48-80745) (USP 3,642,490) discloses a method for treating an isolated soybean protein continuously to produce an acid-stable protein substance in which a slurry of a soybean protein isolated at a pH of about 2.0 to about 4.2 at a solid content of 10 to 15% is formed, a continuous part of the slurry is subjected to a substantially instantaneous heating at about 250°F to about 320°F in a continuous process, the slurry is kept heated for at least several seconds to several minutes under pressure so that a change occurs in the soybean substance thereby destroying a trypsin inhibitor therein, the pressure is reduced rapidly and stepwise from the part where the slurry is pumped continuously to effect an instantaneous evaporation and removal of water vapor from the slurry while separating the vapor from the slurry thereby forming an acid-stable isolated soybean protein product, but there is no mention of use at a neutral pH or about excellent flavor of the resultant soybean protein. This attempt is intended to obtain an acid-soluble protein, which is however poorly soluble at a neutral pH and does not always have an excellent flavor based on the present inventors' findings.

A process for obtaining a soy protein with objectionable beany flavour being absent via a thermal treatment at acidic pH is disclosed in US-A-4 054 679.

An object of the present invention is to provide a soybean protein having excellent flavor, that is, a soybean protein having a substantially reduced odor called "soybean odor" which is present in a soybean protein and derived from soybeans, which can minimize deterioration of the flavor associated naturally with a processed food product when used in such food.

### SUMMARY OF THE INVENTION

The present inventors tried to solve the problems described above and finally discovered that a soybean protein in which odor present in soybean protein is extremely low and which has excellent flavor can be obtained by heating a soybean protein slurry or a soybean protein solution under acidic conditions and then neutralizing.

Thus, the present invention provides a method for producing a soybean protein which comprises heating a soybean protein slurry or a soybean protein solution at 80 to 155°C under acidic conditions of pH 2.0 to 4.0, neutralising the slurry or solution to pH 6.0 to 8.0, subjecting the slurry or solution to a second heating, and then spray-drying the slurry or solution. More preferably, the heating is conducted at 100 to 130°C. It is also preferable that a phosphoric acid or an organic acid or a salt thereof is added before the neutralization of the soybean protein slurry or soybean protein solution and then a calcium compound or a magnesium compound is added.

A soybean protein slurry or soybean protein solution employed in the invention may be a slurry formed by adding water to soybeans or defatted soybeans and then grinding the mixture and a slurry obtained therefrom by removing whey, an extract obtained by extracting soybeans or defatted soybeans with water and then removing lees and a curd slurry obtained therefrom by an acid-precipitation or a neutralized solution obtained therefrom by neutralization.

It is important to prepare such a soybean protein slurry or soybean protein solution under acidic conditions for the purpose of reducing the intense soybean odor. Nevertheless, an excessively low pH may lead to a sour odor even after heating or an increased ash after neutralization, while an excessively high pH may allow the soybean odor to remain, and thus the pH is adjusted to 2.0 to 4.0, more preferably 2.8 to 3.7.

The acid used for adjusting the pH to an acidic pH may be any one of or a combination of the acids capable of being used as food additives, and is preferably sulfuric acid, hydrochloric acid, phosphoric acid or acetic acid, which are employed usually in an acid-precipitation of a soybean protein.

Then the soybean protein slurry or the soybean protein solution adjusted to an acidic pH as described above should be heated. Too low a heating temperature may allow the soybean odor to remain, while too high a heating temperature may lead to a further odor due to the heating, and thus the heating temperature is 80 to 155°C, more preferably 100 to 130°C.

While an indirect heating process may be employed, a direct heating process is preferable, and in a more preferred process a high temperature instantaneous heating sterilizer (UHT sterilizer) is employed to infuse a water vapour at a high temperature under high pressure directly into a soybean protein slurry or soybean protein solution, which is then released rapidly under atmospheric pressure.

While the time period required for the heating is not limited specifically, it may for example be 1 second to 3 hours at a temperature of 80°C or higher and below 100°C, and 1 second to 30 minutes at a temperature of 100°C or higher and below 155°C.

Too low a solid content of a soybean protein slurry or soybean protein solution during heating under acidic conditions as described above may produce a poor drying performance which may raise production expense, while too high a solid content results in a poor deodorizing effect and an increase in the viscosity of the soybean protein solution which may lead to difficulty in fluidization in the heating vessel, and thus the solid content is preferably 3 to 20 % by weight, more preferably 5 to 15% by weight.

As mentioned above, it is preferably to effect heating by UHT sterilizer to infuse water vapor directly into the soybean protein slurry or soybean protein solution which is then released to atmospheric pressure, thereby improving the flavor.

While it is still unclear why the flavor can be improved according to the present invention, it can be assumed that since carbonyl compounds such as aldehydes and ketones are considered generally to be the cause of "soybean odor" and acidic conditions serve to reduce the interaction between carbonyl compounds and proteins, the carbonyl compound can readily be dissociated by heating under acidic conditions and the resultant dissociated odor substance can be removed simultaneously with the evaporation of volatiles when being heated.

Since the resultant solution exhibits a sour taste as it is and may undergo coagulation when mixed with an almost neutral food product due to the pH being close to the isoelectric point depending on the ratio of the mixture and also since it undergoes rapid deterioration of flavor, possibly due to the destabilization and oxidation of trace amounts of fats, when being stored while still acidic, it should be neutralized by a standard method.

While the neutralization can be accomplished by a known alkaline substance, it is accomplished preferably by adding phosphoric acid or an organic acid or a salt thereof and calcium or magnesium ion upon neutralizing a soybean protein slurry or solution.

Such neutralization is effected so that the pH after the neutralization is 6.0 to 8.0, preferably 6.5 to 7.5.

An alkaline substance employed for neutralization may be an alkaline substance as long as it can be employed as a food additive, for example those employed usually for neutralizing a soybean protein such as sodium hydroxide, potassium hydroxide as well as calcium compounds and magnesium compounds. The calcium compound may for example be a hydroxide such as calcium hydroxide or a calcium salt such as calcium carbonate. The magnesium compound may for example be a hydroxide such as magnesium hydroxide or a magnesium salt such as magnesium carbonate. Any of these alkaline substances may be employed alone or in combination with each other.

When a calcium compound or magnesium compound is employed here as an alkaline substance, a better flavor can be obtained when compared with that obtained using only a monovalent metal alkaline substance such as sodium hydroxide. On the other hand, a reduction in solubility in water due to coagulation tends to be observed when compared with the use of a monovalent metal alkaline substance.

Accordingly, it is preferable to add phosphoric acid or an organic acid or a salt thereof at any time before neutralization when a calcium compound or magnesium compound is employed. The organic acid may for example be citric acid, tartaric acid, malic acid, succinic acid, maleic acid, fumaric acid or gluconic acid. The time before neutralization means any time before and after preparing the soybean protein slurry or the soybean protein solution under acidic conditions or the time may be even after heating under acidic conditions. The amount of phosphoric acid or organic acid or salt thereof is preferably within the range from an amount equal to the weight of a divalent metal ion to be added to an amount 10 times the weight. While the mechanism by which the coagulation of a soybean protein or the reduction in water solubility are prevented in response to the addition of such phosphoric acid or organic acid or salt is not understood, it may be assumed that a chelating effect serves to reduce the reactivity of calcium or magnesium with the soybean protein.

While the concentration of the protein during neutralization is not limited particularly as long as the state of a solution can be maintained, it is preferably 3 to 15 % by weight, more preferably 5 to 12 % by weight. A higher concentration results in a higher viscosity, which leads to difficulty in supplying to the subsequent spray-drying machine and a resultant reduction in producibility. On the other hand, a lower concentration leads to a low yield, resulting in reduced producibility.

Since the neutralized solution has insufficient solubility as it is or as only being spray-dried, the method comprises a second heating after the neutralization rather than a single heating under acidic conditions, for the purpose of improving solubility and the gel-forming ability and ameliorating a sandy texture.

While the solid content during the second heating is determined on the basis of the concentration during the heating under an acidic condition, it is almost within the range of the latter ± 2 %.

A lower heating temperature during this second heating, i.e., heating after the neutralization, leads to insufficient solubility while a higher temperature leads to the development of an unacceptable flavor, and the temperature is preferably 100°C to 155°C, more preferably 110°C to 150°C.

While the time period required for the second heating is not limited particularly, it is preferably 1 second to 30 minutes.

Also in the second heating, a high temperature instantaneous heating process for infusing water vapor at high temperature under high pressure directly into a soybean protein solution is suitable. By releasing the solution to atmospheric pressure or lower after the heating, the flavor is further improved.

Thus, as described above, the soybean protein of the present invention can be obtained.

While this soybean protein, when it exists as a solution, can be shipped as it is or in concentrated form and then consumed by a user as it is, it is usually spray-dried into a powder, which is preferable because of the high storage stability and convenient use as a food material.

A soybean protein prepared as described above has an extremely low odor and an excellent flavor.

### DETAILED DESCRIPTION OF THE PREFERRED EMBODIMENTS

### EXAMPLES

The present invention is further described in the following EXAMPLES.

### EXAMPLE 1

Low-denatured defatted soybeans having a PDI (Protein Dispersibility Index) of 80 or higher (FUJI SEIYU) were combined with 15 parts by weight of water, adjusted to pH 7.5 with IN NaOH, and extracted at 3000 rpm for 1 hour at room temperature using a homomixer. Thereafter, the "okara (fibrous residue or soybean pulp)" component was removed by centrifugation to obtain defatted soybean milk. This was adjusted to pH 4.5 with IN HCl to precipitate a proteinous component, centrifuged (1000 G, 10 minutes) to recover the precipitate, thereby obtaining a separated soybean protein curd slurry (hereinafter referred to as "curd slurry"). The solid content in this curd slurry was about 30% by weight. This was combined with water to make the solid content 10 % by weight, adjusted to the pH shown in Table 1 with IN HCl, subjected to a direct high temperature instantaneous heating machine (UHT sterilizer) employing a direct infusion of vapor to effect heating at 120°C for 10 seconds, immediately after which it was released into the atmosphere.

Subsequently, the resultant heated soybean protein curd slurry was neutralized at pH 7.0 with IN NaOH. This neutralized soybean protein solution was subjected again to the UHT sterilizer to effect a heating at 120°C for 10 seconds, immediately after which it was released into the atmosphere and spray-dried to obtain a particulate separated soybean protein. The flavor of a 5 % by weight aqueous solution of this particulate separated soybean protein was evaluated organoleptically by 10 panelists. It was scored with a full scale of 10 points, and judged to be better when scored higher as an average of the scores by 10 panelists.

**Table 1 Difference in flavor by heating pH**

| | | | | | | |
|---|---|---|---|---|---|---|
| Heating pH | 1.9 | 2.4 | 2.9 | 3.4 | 3.8 | 4.1 |
| Flavor | 5.1 | 6.1 | 8.6 | 8.5 | 5.8 | 5.1 |

An acidic pH during the heating step resulted in a score of 5 or higher and a flavor having a reduced soybean odor, which was hardly sensed especially at pH 2.9 and pH 3.4, where an extremely satisfactory flavor was experienced. At pH 1.9, a slightly sour odor was perceived. A soybean odor was perceived slightly at pH 3.8, while it was perceived to some extent at pH 4.1.

### EXAMPLE 2

A curd slurry obtained similarly to Example 1 was combined with water so that the solid content was 10 % by weight, adjusted at pH 3.2 with IN HCl, and then subjected to the UHT sterilizer to effect heating at a temperature as shown in Table 2 for 10 seconds, immediately after which it was released into the atmosphere and then neutralized at pH 7.0 with IN NaOH. This was subjected again to the UHT sterilizer to effect heating at 120°C for 10 seconds, immediately after which it was released into the atmosphere and spray-dried to obtain a particulate separated soybean protein. It was then evaluated similarly to Example 1.

**Table 2 Difference in flavor by heating temperature**

| | | | | | | |
|---|---|---|---|---|---|---|
| Heating Temp (°C) | 70 | 90 | 110 | 120 | 140 | 160 |
| Flavor | 4.2 | 6.7 | 8.9 | 8.7 | 6.8 | 4.4 |

A soybean odor still remained when the heating was conducted at 70°C. While it also still remained when the heating was conducted at 90°C, it was reduced substantially. It was very slight when the heating was conducted at 110°C and 120°C, and a satisfactory flavor was perceived. An unacceptable odor was perceived slightly when the heating was conducted at 140°C due to the heating, and was intense when the heating was conducted at 160°C.

### EXAMPLE 3

A curd slurry obtained similarly to Example 1 was combined with water so that the solid content was 10 % by weight, combined with 2 % by weight of citric acid based on the solid content of the slurry, adjusted to pH 3.2 with IN HCl, and then subjected to the UHT sterilizer to effect a heating at 120° for 10 seconds, immediately after which is was released into the atmosphere. It was combined with 1 % by weight, as calcium, of calcium hydroxide based on the solid content of the slurry, and then neutralized at pH 7.0 with IN NaOH. This was subjected again to the UHT sterilizer to effect a heating at 120°C for 10 seconds, immediately after which it was released into the atmosphere and spray-dried to obtain a particulate separated soybean protein. It was evaluated similarly to Example 1, and scored as 9.1 and judged to have an extremely satisfactory flavor whilst exhibiting almost no soybean odor.

### EXAMPLE 4 (COMPARATIVE - NOT IN ACCORDANCE WITH THE CLAIMED INVENTION)

A curd slurry obtained similarly to Example 1 was combined with water so that the solid content was 10 % by weight, adjusted to pH 3.2 with IN HCl, and then subjected to the UHT sterilizer to effect heating at 120°C for 10 seconds, immediately after which it was released into the atmosphere and then neutralized at pH 7.0 with 1N NaOH. It was then spray-dried to obtain a particulate separated soybean protein. It was evaluated similarly to Example 1, and scored as 7.7 and judged to have less soybean odor. The product was examined for its solubility in water by determining its PDI. The method employed is described below.

### <PDI determination>

A DRINKMASTER BLENDER (Model 936-2, HAMILTON BEACH) was used to mix 20 g of a sample and 300 ml of distilled water at 25°C at 8500 rpm for 10 minutes. Then the resultant slurry was centrifuged at 2700 rpm for 10 minutes, and 15 ml of the resultant supernatant was pipetted into a Kjeldahl tube, and subjected to an AOCS-authorized procedure Aa5-91 or AOCS-authorized procedure Ba4d-90 to determine the nitrogen level by the Kjeldahl method.
- PDI:: (B-S) x N X 0.014 X 100 X 6.25 X100/% total protein mass
- B:: Blank titre (ml) in the Kjeldahl method
- S:: Sample titre (ml) in the Kjeldahl method
- N:: Normality of alkali used in the Kjeldahl method

**Table 3**

| | PDI |
|---|---|
| Product heated at 120°C in Example 2 | 80 |
| Product in Example 4 | 63 |

Based on the results described above, the product in Example 4 which was not heated after neutralization exhibited a satisfactory flavor but tended to undergo a reduction in solubility in water.

### Example 5

A curd slurry obtained similarly to Example 1 was combined with water so that the solid content was 10% by weight, adjusted to pH 3.2 with IN HCl, and then subjected to the UHT sterilizer to effect heating at 120°C for 10 seconds, immediately after which it was released into the atmosphere. It was combined with 1% by weight, as calcium, of calcium hydroxide based on the solid content, and then neutralized at pH 7.0 with IN NaOH. This was subjected again to the UHT sterilizer to effect heating at 120°C for 10 seconds, immediately after which it was released into the atmosphere and spray-dried to obtain a particulate separated soybean protein. It was evaluated similarly to Example 1, and scored as 7.5 and judged to have a weak soybean odor. The product was examined for its solubility in water by determining its PDI.

**Table 4**

| | PDI |
|---|---|
| Product in Example 3 | 80 |
| Product in Example 5 | 39 |

Based on the results described above, the product in Example 5 to which calcium hydroxide was added without adding citric acid during the neutralization exhibited a satisfactory flavor but tended to undergo a reduction in solubility in water.

### COMPARATIVE EXAMPLE 1

A curd obtained similarly to Example 1 was combined with water so that the solid content was 10 % by weight, adjusted to pH 7.0 with In NaOH, and then subjected to the UHT sterilizer to effect heating at 120°C for 10 seconds, immediately after which it was released into the atmosphere. It was then spray-dried to obtain a particulate separated soybean protein. It was evaluated similarly to Example 1, and scored as 3.7 and judged to have an intense soybean odor.

### COMPARATIVE EXAMPLE 2

A curd obtained similarly to Example 1 was combined with water so that the solid content was 10 % by weight, adjusted to pH 3.2 with phosphoric acid, and then subjected to the UHT sterilizer to effect heating at 120°C for 10 seconds, immediately after which it was released into the atmosphere. It was then spray-dried to obtain a particulate separated soybean protein. After neutralizing a 5 % by weight aqueous solution with IN NaOH, it was evaluated similarly to Example 1, and scored as 7.5 and judged to have less soybean odor and to be satisfactory. This product was examined for its PDI by neutralizing at pH 7.0 with IN NaOH whilst mixing with a

### DRINKMASTER BLENDER.

**Table 5**

| | PDI |
|---|---|
| Product heated at 120°C in Example 2 | 80 |
| Product in Comparative Example 2 | 69 |

The solubility in water of the product in Comparative Example 2 which was neutralized after drying was reduced.

In order to examine the salt-solubility, the product was mixed by a DRINKMASTER BLENDER using 2.5 % brine instead of distilled water to determine the PDI in brine.

**Table 6**

| PDI in brine | |
|---|---|
| Product heated at 120° in Example 2 | 86 |
| Product in Comparative Example 2 | 26 |

The salt-solubility of the product in Comparative Example 2 which was neutralized after drying was reduced significantly.

After storing the product in Example 4 and the product in Comparative Example 2 at room temperature (20 to 25°C), the flavor after neutralization was evaluated.

**Table 7**

| Flavor after storage | |
|---|---|
| Product in Example 4 | 7.4 |
| Product in Comparative Example 2 | 3.0 |

While the product in Example 4 which was neutralized exhibited almost no deterioration of flavor, the product in Comparative Example 2 which was stored under acidic conditions exhibited an oxidized fat-like odor, resulting in poor flavor.

According to the present invention, a soybean protein having a substantially reduced odor called "soybean odor" which is present in a soybean protein and derived from soybeans and also having an excellent flavor without deteriorating the flavor associated naturally with a processed food product when used in such food can be obtained by heating a soybean protein slurry or a soybean protein solution under acidic conditions followed by neutralization. Also by heating again after the neutralization, a soybean protein whose solubility is also improved can be obtained. Furthermore, by selecting as an alkaline substance a salt of calcium or magnesium which is a divalent metal and phosphoric acid or an organic acid or a salt thereof for neutralization, a soybean protein having improved flavor and solubility can be obtained. By providing such soybean protein, a substantial contribution to improvement in the quality of a processed food product such as hams, sausages, minced sea foods, hamburger steaks and shao-mais can be expected.

## Claims

1. A method for producing a soybean protein which comprises heating a soybean protein slurry or a soybean protein solution at 80 to 155°C under acidic conditions of pH 2.0 to 4.0, neutralising the slurry or solution to pH 6.0 to 8.0, subjecting the slurry or solution to a second heating, and then spray-drying the slurry or solution.

2. A method according to claim 1, wherein the heating is conducted at 100 to 130°C.

3. A method according to claim 1 or claim 2, wherein phosphoric acid or an organic acid or a salt thereof is added before the neutralization and then a calcium compound or a magnesium compound is added.

## Patentansprüche

1. Verfahren zur Herstellung eines Sojaproteins, das Erwärmen einer Sojaproteinaufschlämmung oder einer Sojaproteinlösung auf 80 bis 155°C unter sauren Bedingungen von pH 2,0 bis 4,0,
Neutralisieren der Aufschlämmung oder Lösung zu pH 6,0 bis 8,0,
Unterziehen der Aufschlämmung oder Lösung einem zweiten Erwärmen und dann
Sprühtrocknen der Aufschlämmung oder Lösung umfaßt.

2. Verfahren gemäß Anspruch 1, wobei das Erwärmen bei 100 bis 130°C durchgeführt wird.

3. Verfahren gemäß Anspruch 1 oder Anspruch 2, wobei Phosphorsäure oder eine organische Säure oder ein Salz davon vor dem Neutralisieren zugesetzt wird und dann eine Calciumverbindung oder eine Magnesiumverbindung zugesetzt wird.

## Revendications

1. Procédé de production d'une protéine de soja, qui comprend les étapes consistant à chauffer une suspension de protéine de soja ou une solution de protéine de soja à une température de 80 à 155°C dans des conditions acides de pH 2,0 à 4,0, neutraliser la suspension ou la solution à un pH de 6,0 à 8,0, soumettre la suspension ou la solution à un deuxième chauffage et ensuite sécher par pulvérisation la suspension ou la solution.

2. Procédé selon la revendication 1, dans lequel le chauffage se fait à une température de 100 à 130°C.

3. Procédé selon la revendication 1 ou la revendication 2, dans lequel de l'acide phosphorique ou un acide organique ou un sel de ces acides est ajouté avant la neutralisation et ensuite un composé de calcium ou un composé de magnésium est ajouté.
